# EUROPEAN PATENT SPECIFICATION

(11) **EP 2 512 303 B1**
(45) Date of publication and mention of the grant of the patent: **18.05.2016**
(21) Application number: 10801155.2
(22) Date of filing: 17.12.2010
(51) Int. Cl.: A47J 31/40, A47J 47/01

(54) **BEVERAGE DISPENSER WITH POWDER DISPENSING CANISTER**
GETRÄNKESPENDER MIT PULVERAUSGABEBEHÄLTER
DISTRIBUTEUR DE BOISSONS AVEC RÉSERVOIR DE DISTRIBUTION DE POUDRE

(30) Priority: 17.12.2009 EP 09179552
(43) Date of publication of application: 24.10.2012
(73) Proprietor: Nestec S.A., 1800 Vevey (CH)
(72) Inventor: GIGANDET, Christel, CH-1617 Remaufens (CH); RAMAIOLI, Marco, CH-1009 Pully (CH); MURPHY, Richard Luke, CH-1475 Montbrelloz (CH); REY, Cédric, CH-1315 La Sarraz (CH); FILLIOL, Carine, F-25370 Métabief (FR); JACCARD, Sandrine, CH-1450 Ste-Croix (CH)
(74) Representative: Ducreux, Marie
(86) International application number: PCT/EP2010/070106
(87) International publication number: WO 2011/080124

(56) References cited:
- US-A1- 2004 173 637
- US-B1- 7 461 763

## Description

### Field of the invention

The present invention relates to improvements in dosing of a powder from a canister in beverage dispensing equipment. The canister used in the dispenser of the invention may, for example, be used to dispense in a more consistent manner metered quantities of dry powdered beverage preparation material.

### Background of the invention

Various automated beverages or food dispensers for making hot or cold reconstituted products are known in the art. In a conventional beverage or food dispenser, a metered amount of water-soluble beverage-forming or food-forming powder supplied from a storage canister, and a complementary metered amount of hot or cold water supplied from a water source are mixed to produce a final product, which is dispensed into a cup or glass. There are several identified issues with dispensing these powders in the traditional canisters.

The first issue relates to the consistency of powder dosing that more particularly refers to the dose-to-dose variation. Typically, the gram-throw of powder dramatically decreases after a certain number of throws and the reconstituted beverage or food becomes more diluted. In terms of product quality, the consistency of the product is important for meeting the satisfaction of the consumer. If the dose-to-dose variation is too large, e.g., on the order of 5 % of powder discrepancy or more, it affects the in-cup quality of the product in a way that becomes perceptible for the consumer.

The second issue relates to the powder evacuation out of the canister which may be incomplete or inconsistent within a predetermined tolerance. In short, the canister is unable to empty up to a certain point and a significant amount of powder remains. In traditional canisters, powder evacuation issues include doses or gram-throws that are below the target throw as well as powder that remains in the canister and that the dosing mechanism cannot further deliver. In terms of autonomy, a canister that delivers a small volume of powder within the specifications must be more frequently filled by the operator, in order for the beverage not to become unacceptably weak when the powder level becomes low. Therefore, such low performing canisters may impact product quality and may require more attention from the operator in refilling and maintenance of the device. Moreover powder evacuation issues cause hygiene problems since a part of the powder cannot be evacuated and can stay in the canister for a longer time than its shelf life.

Systems have been developed which consist of a single rotary wheel and a breaking mechanism such as wire tapers or springs attached to the wheel. Typical canisters are described in U.S. patents 3,013,701 and 4,207,995.

Dosing is usually performed by an auger, either a spring or screw auger. The dosing end of the canister contains an exit that directs the powder towards the mixing area as it exits. US 2003/0234261 provides such a canister in which agitating wheels are operatively associated with the rotatable volumetric dosing means to rotate in the reservoir upon actuation of the rotatable volumetric dosing means. This prior art also discloses the use of a spring auger as rotatable volumetric dosing means and of a solid insert placed within the spring auger to improve dosing consistency and reduce the dose-to-dose variation.

Yet installing pieces in the powder itself is not always recommended, for several reasons. First of all, pieces in the powder have to be compatible with edible products and should not decrease the quality of the powder. Moreover, pieces in the canister take a significant place, decreasing the volume dedicated to the powder. Finally, these pieces influence the powder density, by compressing the powder on one side of the wheel and lightening it on the other side, generating variations in the dosage.

Then there is still a need to improve powder dosing canisters in the point of view of the consistency of powder dosing and the complete evacuation of the powder out of the canister.

### Summary of the invention

The invention concerns a beverage dispenser according to claim 1.

The reservoir presents two terminal walls and two side walls. The terminal walls usually include a front wall and a rear wall, the front wall corresponding to the part of the reservoir comprising the powder outlet from where the stored powder is dispensed. At its bottom, the reservoir presents a U shaped throat and the dosing means is arranged in this U shaped throat of the reservoir between the two terminal walls. The upper point of the U shaped throat extends at least up to the top of the rotatable volumetric dosing means.

At least the portion of at least one of the walls reservoir above the U shaped throat is straight and outwardly inclined compared to the reservoir internal volume. Preferably at least the two side walls present at least a straight portion above the U shaped throat that is outwardly inclined. Preferably they are inclined according to the same angle α. In the same manner, generally at least one of the two peripheral walls presents at least a portion above the U shaped throat that is inclined according to an angle β. Above these outwardly inclined portions, the walls can present any shape either curved or straight. Yet in order to optimize the foot print of the reservoir in the machine, only the portion of the walls just above the U shaped throat can be inclined and the rest of the walls can be vertical, particularly in the case of the peripheral walls. In order to solve the problem of accurate dosing, the portions of the reservoir walls above the U shaped throat are outwardly inclined according to an angle (α, β) of at most 25 °, preferably at most 20°, with the vertical.

According to the preferred embodiment of the invention the whole top surface of the volumetric dosing means is free and can be fed by powder. In particular the whole top surface of the volumetric dosing means is devoid of obstructing parts. The powder is free to cover all the top surface of the volumetric dosing means.

According to another preferred embodiment of the invention the internal volume of the reservoir upper the U shaped throat is deprived of internal baffles. Then the powder stored in the reservoir is guided to the rotatable volumetric dosing means only by the outwardly inclined wall portion(s). Preferably the internal volume of the reservoir upper the U shaped throat is also deprived of internal rotary wheels or internal tappers.

According to a preferred embodiment, the front portion of the rotatable volumetric dosing means longitudinally extends out of the bottom of the reservoir and said front portion extending out of the reservoir is lodged in an empty cylinder. The cylinder generally presents the same diameter as the rotatable volumetric dosing means so that the rotatable volumetric dosing means can freely turn inside. This cylinder can improve the accurate dosing of the dispensing canister by preventing parasitical powder flows from entering in the rotatable volumetric dosing means near the front part.

The volumetric dosing means used in the in the dispensing canister of the present invention are configured for displacing a volume of powder longitudinally that is horizontally through the bottom of the reservoir from the rear wall to the front wall. The volumetric dosing means can be a screw auger or a spring auger. Preferably, the diameter of the screw auger or the spring auger is essentially the same as the diameter of the half cylinder part of the U shaped throat. Then the auger is able to freely rotate inside the half pipe. Generally the rotatable volumetric dosing means is actuated by a motor.

According to another preferred embodiment, the auger can be arranged to transport a volume of powder that varies as a function of the longitudinal position along the auger. In the preferred embodiment, the auger is arranged to comprise a transport volume for the powder that is lower in the rear portion of the auger than in the front portion of the auger. The volume can increase on a progressive or stepped basis. The volumetric dosing means can be a spring auger with a solid insert located within the spring in a rear portion of the auger. This insert can present a decreasing cross section along the spring length from the rear end to the front end. Hence, the solid insert creates a reduction of the capacity of the auger to transport powder in this area as compared to the front area. This insert has preferably the shape of a cone pointing its sharp end near the front side of the canister.

According to a specific mode, the ratio of the throat length on the throat width is preferably at most 6.

According to another embodiment the dispensing canister can comprise tapping means or vibrating means to tap the external surface of the container. But the container of the present invention usually does not comprise any agitating, tapping or vibrating means inside the powder container volume.

The dispensing canister of the present invention is preferably used for dispensing a beverage-forming powder that is supplied to the reservoir like for example a coffee, milk, chocolate, tea, or creamer powder. The canister is particularly adapted for dispensing a powder presenting a maximal powder size of 4 mm, preferably of 3 mm.

The outlet of the canister can be oriented so as to deliver the dosed powder in a mixing bowl or a cup in which the dose of powder is mixed with a diluent.

### Brief description of the drawings

The characteristics and advantages of the invention will be better understood in relation to
- Figures 1 is a perspective view of the dispensing canister used in the present invention.
- Figure 2 is the section view AA of the dispensing canister of Figure 1.
- Figure 3 is a side view of the dispensing canister of Figure 1.
- Figure 4 is the section view BB of the dispensing canister of Figure 1.
- Figure 5 is a transversal section of the bottom part of a reservoir tank of a dispensing canister according to the prior art.
- Figures 6-8 are graphs illustrating the dosing variation of the canister of the present invention and of a canister of the prior art for the dispensing of different powders.

### Detailed description of the drawings

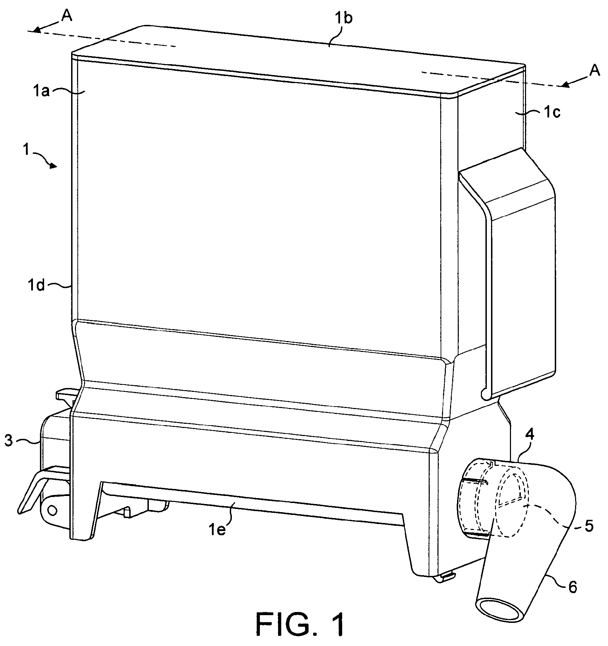

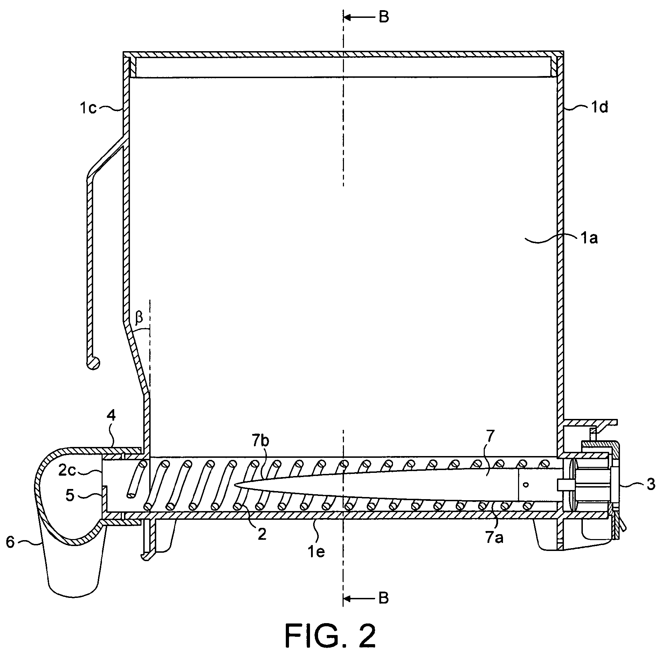

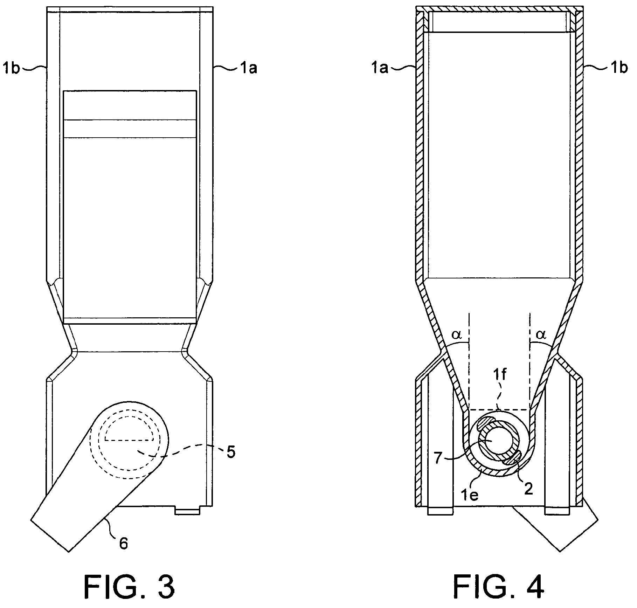

Figure 1 illustrates the dosing canister used in the beverage dispenser of the present invention. It comprises a reservoir 1 presenting two side walls 1 a, 1 b and two terminal walls : a front terminal wall 1 c and a rear terminal wall 1d. The front part of the canister is considered to be the part situated in the vicinity of the outlet. The bottom 1e of the reservoir is a U shaped throat 1e in which rotatable volumetric dosing means is lodged as illustrated in Figures 2 and 4. The illustrated rotatable volumetric dosing means is a spring auger 2 but it could also be a screw auger or any other volumetric dosing means that is configured for displacing a volume of powder longitudinally through the bottom of the reservoir that is horizontally from the rear wall to the front wall. It extends through the entire length of the reservoir at the bottom end thereof. The rear end of the auger is rotatably supported by an aperture of the rear terminal wall 1d and terminates by a connector 3. The connector 3 is intended to be linked to a shaft of a conventional electrical actuating system such as DC motor. An insert 7 is present inside the auger spring. This insert presents a decreasing cross section along the spring length from the rear end 7a to the front end 7b. According to the invention, the upper point 1f of the U shaped throat extends at least up to the top of the rotatable volumetric dosing means, that is here the top of the auger spring : this point 1f appears on the section view of the reservoir 1 according to Figure 4. It means that the rotatable volumetric dosing means are vertically completely lodged in the U shaped throat. The portions of the walls 1 a, 1 b, 1 c attached to the U shaped throat are outwardly inclined according to an angle α of 20° and β of 20° with the vertical. Due to these outwardly angles, the reservoir presents a bigger storing volume than if the walls were vertical. Yet the choice of the specific value inferior to 20° plays also a role in the improvement of the dosing accuracy of the canister and its full emptying.

The front portion 2c of the rotatable volumetric dosing means longitudinally extends out of the bottom of the reservoir 1e and is lodged in a closed cylinder 4. The cylinder presents essentially the same diameter as the auger spring. An optional chute 6 corresponding to the outlet of the canister can be mounted at the end of the cylinder 4 and serves to redirect the flow of powder exiting from the canister for example in direction of a mixing bowl or a dispensing line. A weir 5 can also be present to partially obstruct the front end of the cylinder. This weir appears in Figures 1 and 3 in which the chute 6 has been made partially transparent.

Compared to the dispensing canister of the prior art, the dispensing canister of the present invention presents less dosing variations, a higher refill point, less standard deviation before the refill point and it decreases the quantity of powder remaining in the container.

### EXAMPLES

A canister according to the present invention and a canister according to the prior art were filled with different types of powders. These powders were delivered by the dispensing canisters and their dosing variations, their evacuation rate, their standard deviation from the refill point and the quantity of powder remaining in the container at the end of the tests were measured.

In the examples the canister of the present invention was the one illustrated in Figures 1-4.

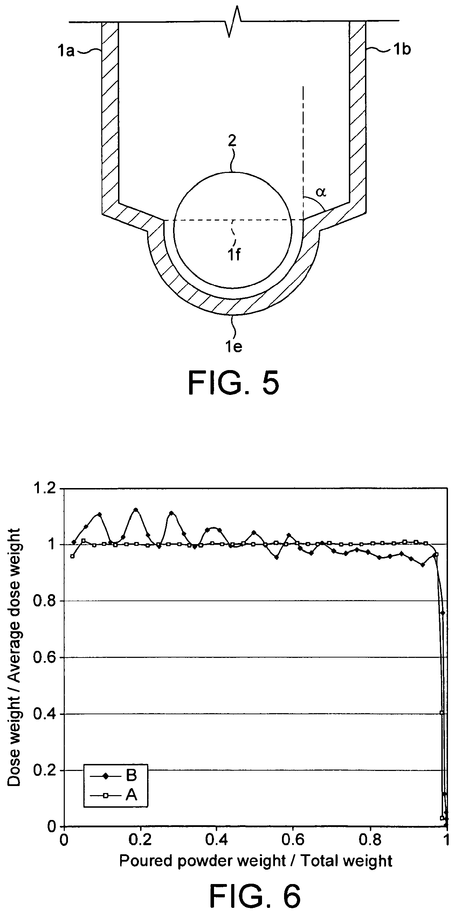

Contrary to the canister of the present invention, in the canister of the prior art :
- the spring auger was lodged in a half pipe (1f), so that the spring (2) was only half submerged in the pipe, half of the spring extending out of said half pipe as illustrated in Figure 5.
- the side walls (1a, 1b) of the reservoir above the spring auger presented an angle α of more than 20° with the vertical.
- the peripheral walls of the reservoir above the spring auger presented an angle β of 20° with the vertical (not represented).

The canister of the prior art also comprised a rotating wheel which was driven by the engagement of its peripheral teeth with the spring auger. No insert was present in the spring auger.

### Example 1

The dosing variations of the canisters were illustrated by representing the ratio of the dose weight / the average dose weight in function of the ratio of the poured powder weight / the weight put in the canister at the beginning of the test for each powder. The results are illustrated by Figures 6-8.

The graphs were made for each powder with the canister according to the invention and the canister according to the prior art.

Figure 6 illustrates the dosing variation of a canister according to the present invention (graph A) and according to the prior art (graph B) for dosing and dispensing a cappuccino powder. It appears that the ratio of the dose weight / the average dose weight for the dispensing canister of the present invention is almost equal to 1 from the time the canister is full until it is emptied, whereas the ratio of the dose weight / the average dose weight for the dispensing canister of the prior art varies between 0,83 and 1,1.

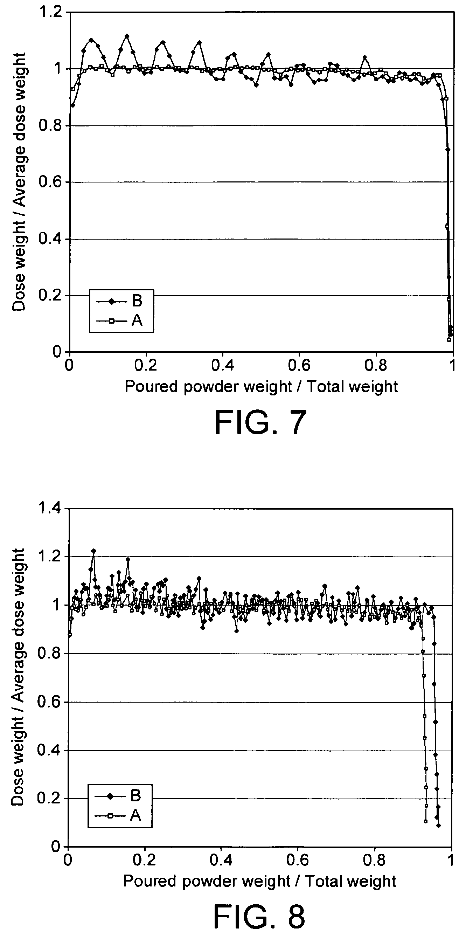

Figure 7 illustrates the same dosing variations for a chocolate powder.

Figure 8 illustrates the same dosing variations for a coffee powder.

### Example 2

The evacuation rate corresponds to the percentage of powder weight dispensed from the reservoir compared to the powder weight filled in the reservoir when the dosing variation moves away from 1.

The evacuation rate of the canister of the present invention, calculated as the mean of 14 different powders (including creamer, coffee, chocolate, cappuccino topping, ...) was 91 %, whereas it was 67 % for the canister of the prior art.

### Example 3

The standard deviation was computed before the refill point of the canister of the present invention, calculated as the mean of 14 different powders (including creamer, coffee, chocolate, cappuccino topping, ...) was 2,2 %, whereas it was 5,2 % for the canister of the prior art.

### Example 4

The quantity of powder remaining in the container at the end of the tests corresponds to the powder weight that cannot be dispensed by the dosing means and that stays in the reservoir.

This quantity of powder for the canister of the present invention, calculated as the mean of 14 different powders (including creamer, coffee, chocolate, cappuccino topping, ...) was 0,4 %, whereas it was 3,8 % for the canister of the prior art.

## Claims

1. A beverage dispenser comprising a dispensing canister for dispensing a beverage-forming powder, said canister comprising :
- a reservoir (1) having a bottom in the form of a U shaped throat, two terminal walls (1 c, 1 d) and two side walls (1 a, 1 b) said side walls being attached to the upper extremities of the U shaped throat,
- a rotatable volumetric dosing means (2) :
. longitudinally extending through the bottom of the reservoir (1 e), and
. configured for displacing a volume of powder longitudinally through the bottom of the reservoir, and
. lodged in the U shaped throat, the upper point of the U shaped throat extending at least up to the top of the rotatable volumetric dosing means, and
wherein at least the portion of at least one of the reservoir side walls attached to the U shaped throat is straight and outwardly inclined according to an angle of at most 25°, preferably at most 20°, with the vertical.

2. A beverage dispenser according to Claim 1, wherein the internal volume of the reservoir upper the U shaped throat is deprived of internal baffles.

3. A beverage dispenser according to any of the precedent claims, wherein the front portion (2c) of the rotatable volumetric dosing means longitudinally extends out of the bottom of the reservoir and said front portion extending out of the reservoir is lodged in a cylinder (4).

4. A beverage dispenser according to any of the precedent claims, wherein the volumetric dosing means (2) is a screw auger or a spring auger.

5. A beverage dispenser according to any of the precedent claims, wherein the volumetric dosing means is a spring auger with a solid insert (7) located within the screw in a rear portion of the auger.

6. A beverage dispenser according to claim 5, wherein the insert present a decreasing cross section along the spring length from the rear end to the front end.

7. A beverage dispenser according to any of the precedent claims, wherein the ratio of the throat length on the throat width is at most 6.

8. A beverage dispenser according to any of the precedent claims, wherein the rotatable volumetric dosing means (2) is actuated by a motor.

## Patentansprüche

1. Getränkeautomat, einen Abgabebehälter zur Abgabe eines getränkebildenden Pulvers umfassend, wobei der Behälter Folgendes umfasst:
- ein Gefäß (1), das einen Boden in Form eines u-förmigen Halsstücks, zwei Abschlusswände (1c, 1d) und zwei Seitenwände (1a, 1b) aufweist, wobei die Seitenwände an den oberen Enden des u-förmigen Halsstücks befestigt sind,
- ein drehbares volumetrisches Mittel zum Dosieren (2), das:
· sich längs durch den Boden des Gefäßes (1 e) erstreckt, und
· so konfiguriert ist, dass es eine Pulvermenge längs durch den Boden des Behälters befördert, und
· sich in dem u-förmigen Halsstück befindet, wobei sich der oberste Punkt des u-förmigen Halsstücks mindestens bis zum oberen Ende des drehbaren volumetrischen Mittels zum Dosieren erstreckt, und
wobei zumindest der an dem u-förmigen Halsstück befestigte Teil von mindestens einer der Seitenwände des Gefäßes gerade und gemäß einem Winkel von höchstens 25°, vorzugsweise höchstens 20°, zur Vertikalen nach außen geneigt ist.

2. Getränkeautomat nach Anspruch 1, wobei das Innenvolumen des Gefäßes oberhalb des u-förmigen Halsstücks keine inneren Trennwände aufweist.

3. Getränkeautomat nach einem der vorstehenden Ansprüche, wobei der vordere Teil (2c) des drehbaren volumetrischen Mittels zum Dosieren sich längs aus dem Boden des Gefäßes heraus erstreckt und der aus dem Gefäß ragende vordere Teil sich in einem Zylinder (4) befindet.

4. Getränkeautomat nach einem der vorstehenden Ansprüche, wobei das volumetrische Mittel zum Dosieren (2) eine schraubenartige Förderschnecke oder eine federartige Förderschnecke ist.

5. Getränkeautomat nach einem der vorstehenden Ansprüche, wobei das volumetrische Mittel zum Dosieren eine federartige Förderschnecke mit einem festen Einsatz (7) innerhalb der Schraube in einem hinteren Teil der Förderschnecke ist.

6. Getränkeautomat nach Anspruch 5, wobei der Einsatz entlang der Länge der Feder vom hinteren zum vorderen Ende einen abnehmenden Querschnitt aufweist.

7. Getränkeautomat nach einem der vorstehenden Ansprüche, wobei das Verhältnis der Länge des Halsstücks zur Breite des Halsstücks höchstens 6 beträgt.

8. Getränkeautomat nach einem der vorstehenden Ansprüche, wobei das drehbare volumetrische Mittel zum Dosieren (2) durch einen Motor angetrieben wird.

## Revendications

1. Distributeur de boissons comprenant un récipient de distribution pour distribuer une poudre pour boisson, ledit récipient comprenant :
- un réservoir (1) muni d'un fond formé d'un col en forme de U, deux parois terminales (1c, 1d) et deux parois latérales (1a, 1b), lesdites parois latérales étant fixées aux extrémités supérieures du col en forme de U,
- un moyen de dosage volumétrique rotatif (2) :
. s'étendant longitudinalement à travers le fond du réservoir (1e), et
. configuré pour déplacer un volume de poudre longitudinalement à travers le fond du réservoir, et
. logé dans le col en forme de U, le point supérieur du col en forme de U s'étendant au moins jusqu'à la partie supérieure du moyen de dosage volumétrique rotatif, et
dans lequel au moins la partie d'au moins une des parois latérales du réservoir fixée au col en forme de U est droite et inclinée vers l'extérieur selon un angle inférieur ou égal à 25°, de préférence inférieur ou égal à 20°, par rapport à la verticale.

2. Distributeur de boissons selon la revendication 1, dans lequel le volume interne du réservoir situé au-dessus du col en forme de U est dépourvu de chicanes internes.

3. Distributeur de boissons selon l'une quelconque des revendications précédentes, dans lequel la partie avant (2c) du moyen de dosage volumétrique rotatif s'étend dans le sens longitudinal hors du fond du réservoir et ladite partie avant s'étendant hors du réservoir est logée dans un cylindre (4).

4. Distributeur de boissons selon l'une quelconque des revendications précédentes, dans lequel le moyen de dosage volumétrique (2) est une vis sans fin ou une vis à ressort.

5. Distributeur de boissons selon l'une quelconque des revendications précédentes, dans lequel le moyen de dosage volumétrique est une vis à ressort munie d'un insert plein (7) situé à l'intérieur de la vis dans une partie arrière de la vis sans fin.

6. Distributeur de boissons selon la revendication 5, dans lequel l'insert présente une section transversale décroissante sur la longueur du ressort depuis l'extrémité arrière jusqu'à l'extrémité avant.

7. Distributeur de boissons selon l'une quelconque des revendications précédentes, dans lequel le rapport de la longueur du col à la largeur du col est inférieur ou égal à 6.

8. Distributeur de boissons selon l'une quelconque des revendications précédentes, dans lequel le moyen de dosage volumétrique (2) est actionné par un moteur.
